## Europäisches Patentamt

## European Patent Office

## Office européen des brevets

(19)

(11) Numéro de publication: **0 283 356**
**B1**

(12)
# FASCICULE DE BREVET EUROPEEN

(45) Date de publication du fascicule du brevet:
**27.06.90**

(51) Int. Cl.⁵: **B60N 2/06**

(21) Numéro de dépôt: **88400414.4**

(22) Date de dépôt: **23.02.88**

(54) Agencement d'un siège sur le plancher d'un véhicule automobile.

(30) Priorité: **04.03.87 FR 8702948**

(43) Date de publication de la demande:
**21.09.88 Bulletin 88/38**

(45) Mention de la délivrance du brevet:
**27.06.90 Bulletin 90/26**

(84) Etats contractants désignés:
**DE GB IT**

(56) Documents cités:
**EP-A- 0 112 565**
**EP-A- 0 116 279**
**EP-A- 0 171 660**
**FR-A- 799 003**
**FR-A- 2 329 470**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Levitre, Gilles, 28, Chemin du Pont Hameau des Chevrins, F-92230 Gennevilliers(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention concerne un agencement de siège sur un plancher de véhicule automobile tel que défini dans le préambule de la revendication 1 et connu par exemple par le document EP-A 0 171 660.

D'une façon générale, les sièges des véhicules automobiles et, notamment, les sièges des passagers avant, sont montés coulissants sur deux rails parallèles fixés au plancher du véhicule.

Diverses solutions ont été envisagées pour permettre un montage rapide du siège et des rails sur le plancher du véhicule :

- Suivant une première solution, les deux rails coopèrent chacun avec une coulisse portée par le siège et sont chacun fixés au plancher du véhicule à l'une de leurs extrémités par un moyen d'accrochage à engagement longitudinal, et à leur autre extrémité par un moyen d'immobilisation. On entend par moyen d'accrochage à engagement longitudinal un jeu de moyens complémentaires, respectivement mâle et femelle, portés l'un par le rail, l'autre par le plancher et dont l'engagement ou le dégagement est réalisé par un déplacement relatif entre le rail et le plancher, suivant la direction longitudinale du rail.

Avec un tel agencement chaque rail est préalablement engagé sur ou dans la coulisse correspondante et il est ensuite monté et fixé sur le plancher par les moyens d'accrochage et d'immobilisation précités.

- Selon un autre agencement, il est prévu un premier rail qui coopère avec une coulisse portée par le siège et qui est fixé au plancher au moyen de plusieurs vis. Il est prévu de plus un second rail qui est creux et reçoit latéralement deux patins coulissants solidaires du siège.

Le premier rail est préalablement engagé sur ou dans la coulisse portée par le siège, tandis que le rail creux est fixé au plancher. Le montage du siège s'effectue en engageant latéralement les patins dans le rail creux puis en fixant l'autre rail sur le plancher au moyen des vis.

Ces différents dispositifs présentent tous une difficulté de montage car ils nécessitent d'aligner avec précision, selon le cas, les moyens d'accrochage, les moyens d'immobilisation, les patins avec le rail creux et les vis avec des trous taraudés destinés les recevoir. Une telle précision d'alignement constitue un obstacle quasiment insurmontable au montage du siège par un robot. Ceci constitue un inconvénient grave pour des chaînes de montage modernes dans lesquelles la robotisation tend à se généraliser.

Le but de cette invention est par conséquent de fournir des moyens grâce auxquels le montage d'un siège sur le plancher d'un véhicule puisse être réalisé sans requérir une précision d'alignement très importante, de telle sorte que ce montage puisse être réalisé de façon automatique, notamment par l'intervention de robots.

A cet effet l'invention a pour objet un agencement d'un siège sur un plancher de véhicule automobile, comprenant au moins un rail fixé au plancher, au moins une coulisse fixée au siège et coopérant avec le rail, ce dernier étant fixé au plancher, d'une part, par des moyens d'accrochage comprenant des organes mâle et femelle complémentaires, portés respectivement par le rail et le plancher et pouvant être engagés l'un dans l'autre ou dégagés par un déplacement relatif suivant une direction sensiblement parallèle à la direction longitudinale du rail, et, d'autre part, par des moyens d'immobilisation, caractérisé en ce que le plancher comporte au voisinage dudit organe femelle un organe de guidage à section transversale en V, comportant un fond et deux parois latérales évasées en direction du siège, ledit organe femelle étant disposé dans le prolongement du fond et de la partie adjacente desdites parois latérales.

Suivant d'autres caractéristiques :
- l'organe de guidage est délimité directement dans un renfoncement du plancher qui délimite également un orifice constituant l'organe femelle ;
- l'organe de guidage est rapporté dans un renfoncement du plancher et comporte une paroi sensiblement verticale dans laquelle est ménagé un guide tubulaire qui est engagé dans un orifice du plancher et reçoit l'organe mâle ;
- le rail comporte à son extrémité arrière en considérant le sens de déplacement du rail correspondant à l'engagement des moyens d accrochage, une surface d'appui sur une surface sensiblement horizontale du plancher et une surface inclinée adaptée pour venir en butée contre une surface également inclinée du plancher ;
- le siège comporte au moins deux doigts latéraux s'étendant perpendiculairement à la direction longitudinale de la coulisse et du rail, ces deux doigts étant montés coulissants, par l'intermédiaire d'un patin, dans un rail et le patin comporte un logement pour chaque doigt latéral et délimite au voisinage immédiat de ce logement, une zone de guidage évasée comportant un fond et deux parois, le logement étant situé dans le prolongement du fond et de la partie adjacente des parois.

L'invention va être décrite plus en détail ci-dessous en se référant aux dessins annexés, donnés uniquement à titre d'exemples et sur lesquels :

- la figure 1 est une vue schématique en perspective d'un premier mode de réalisation d'un siège muni de rails devant être fixés sur le plancher d'un véhicule ;
- la figure 2 est une vue partielle à plus grande échelle, en coupe longitudinale suivant la ligne 2-2 de la figure 6 des moyens de fixation d'un rail sur le plancher du véhicule ;
- la figure 3 est une vue en coupe suivant la ligne 3-3 de la figure 2 ;
- la figure 4 est une vue en élévation de l'arrière d'une variante d'agencement d'un siège sur le plancher d'un véhicule, avec coupe partielle selon la ligne 4-4 de la figure 5 ;
- la figure 5 est une vue en coupe selon la ligne 5-5 et partiellement selon la ligne 5'-5' de la figure 4 ;
- la figure 6 est une vue de dessus de l'agencement de la figure 4 ;
- la figure 7 est une vue en coupe transversale d'un agencement utilisé dans le mode de réalisation des figures 4 à 6 ;

- la figure 8 est une vue en coupe suivant la ligne 8-8 de la figure 7.

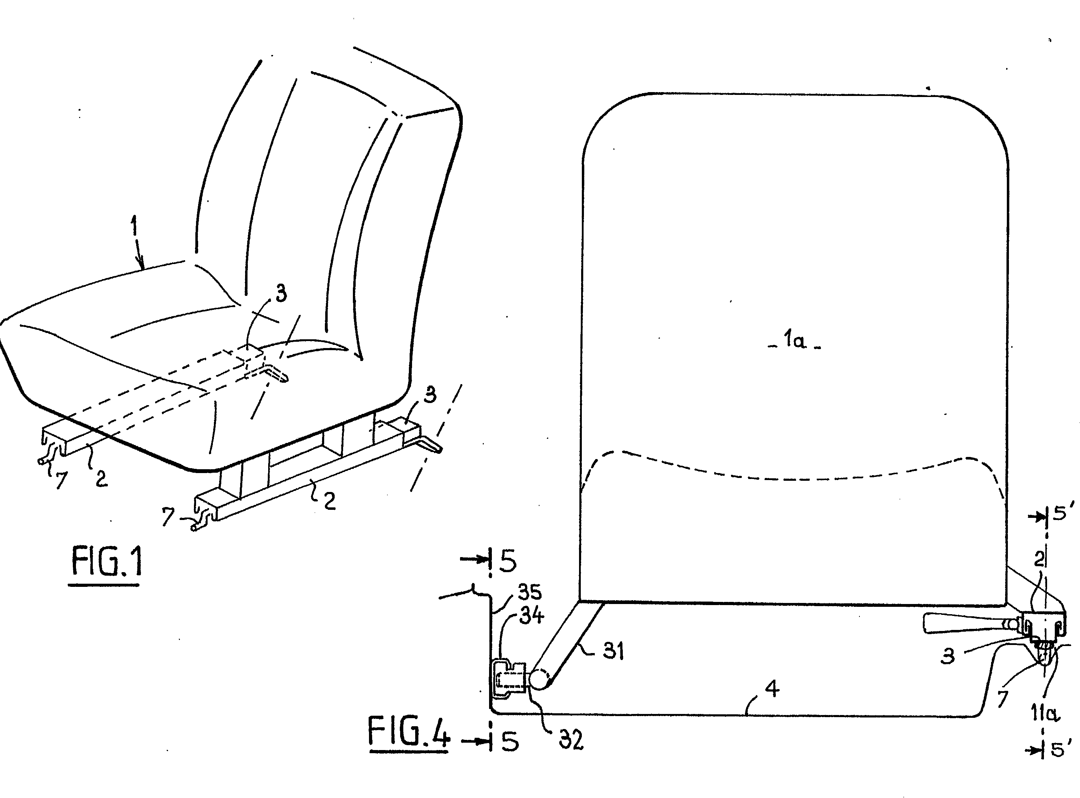

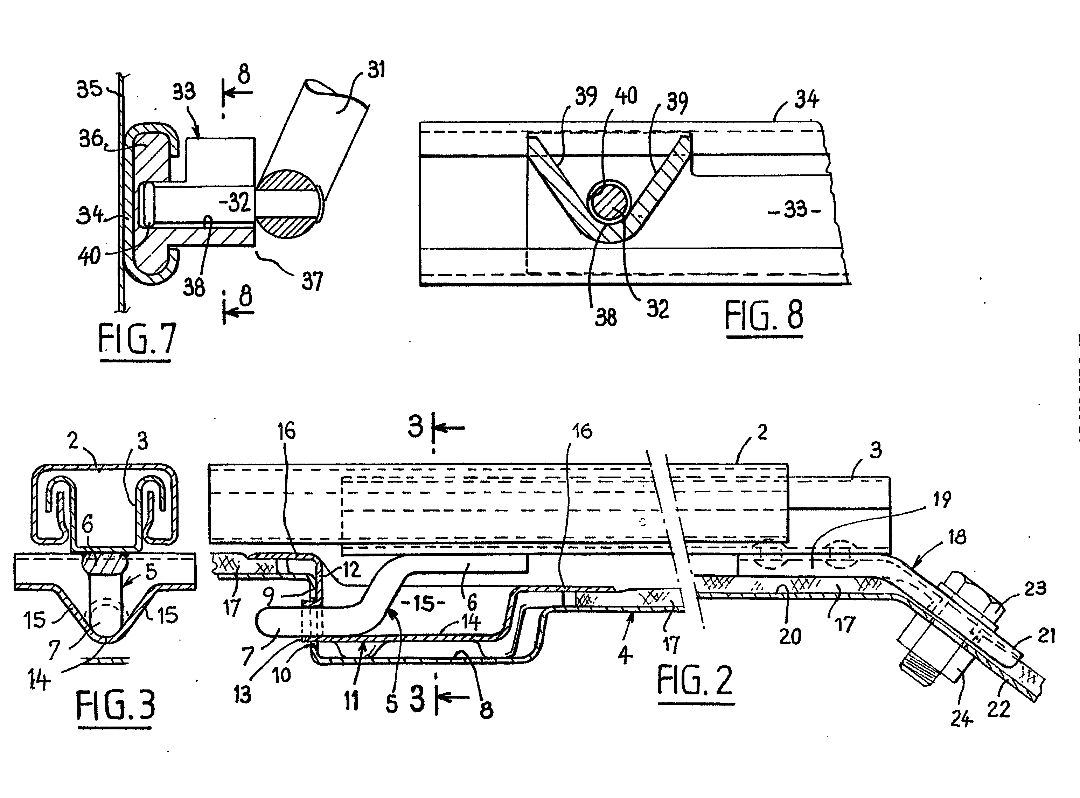

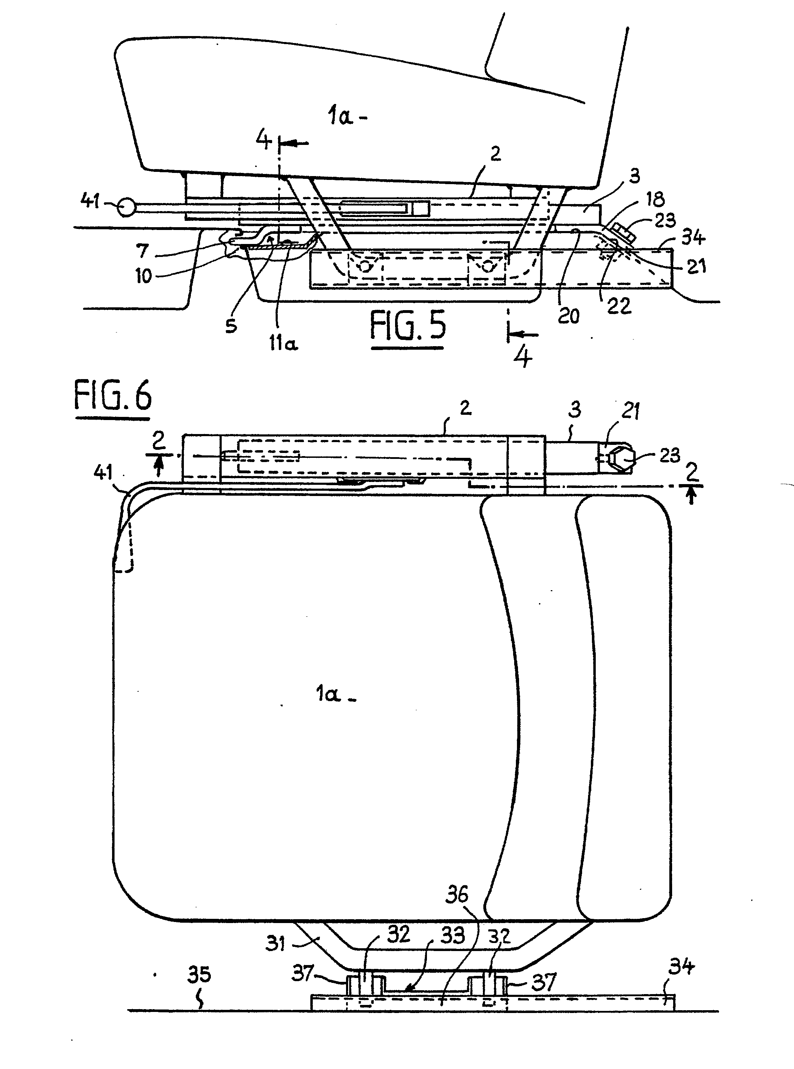

On a représenté schématiquement à la figure 1 un siège 1 de véhicule portant à sa partie inférieure des coulisses 2 pouvant se déplacer le long de deux rails 3, chacun de ces rails étant monté et fixé sur le plancher 4 du véhicule par des moyens d'accrochage et de fixation représentés plus en détail aux figures 2 et 3. Un mécanisme classique, non représenté, est bien entendu prévu pour immobiliser les coulisses le long du rail dans la position choisie par l'utilisateur.

Les moyens d'accrochage entre un rail 3 et le plancher 4 du véhicule comprennent des organes complémentaires respectivement mâle et femelle. L'organe mâle est constitué par un doigt 5 fixé sur le rail, par exemple à la partie inférieure avant de celui-ci, ce doigt s'étendant parallèlement à la direction longitudinale du rail. Dans l'exemple représenté ce doigt a une forme en S aplati, il est soudé au rail par l' une 6 de ses branches, tandis que son autre branche 7 constitue sa partie active, coopérant avec l'organe femelle.

Ce dernier est constitué par un renfoncement 8 du plancher comportant une paroi avant 9, sensiblement verticale dans laquelle est ménagé un orifice 10 (Fig. 2). Dans le renfoncement 8 est reçue une pièce rapportée 11 délimitant une cuvette à section transversale en V (Fig 3) dont la longueur, suivant la direction longitudinale du rail 3 est supérieure à la longueur du doigt 7. La pièce 11 comporte une paroi avant 12 sensiblement verticale dans laquelle est ménagé un guide tubulaire 13 emmanché dans l'orifice 10. Ce guide assume une double fonction : de maintien de la pièce 11 par rapport au plancher et de réception du doigt 7. La pièce 11 comporte également un fond 14 et deux parois latérales 15 qui vont en s'évasant en direction du siège. Le guide tubulaire 13 est situé dans le prolongement du fond 14 et des parties inférieures des parois latérales 15.

La piéèce rapportée repose par ailleurs par des rebords 16 sur le plancher recouvert, de façon classique, par un revêtement de garnissage 17. A son extrémité arrière, opposée à celle sur laquelle est fixé le doigt 5, le rail porte une patte 18, fixée par exemple au moyen de rivets, cette patte comportant une partie 19 parallèle au rail, qui repose sur une face 20 du plancher parallèle au fond de la cuvette et recouverte du revêtement 17, et une partie 21 repliée vers le bas, qui sert de butée en prenant appui sur une face 22 du plancher qui est inclinée par rapport à la direction du doigt. La fixation du rail sur le plancher est réalisée par exemple au moyen d'une vis 23 qui traverse la patte et coopère avec un écrou 24 soudé sous la face 22 du plancher.

Les figures 4 à 6 représentent un agencement différent de celui de la figure 1, dans lequel un siège 1a est supporté sur le plancher du véhicule, d'une part, par un dispositif analogue à celui représenté aux figures 2 et 3 et d'autre part par un dispositif tel que représenté aux figures 7 et 8. On notera toutefois que la pièce rapportée 11 des figures 2 et 3 est supprimée et que la cuvette 11a assurant le guidage du doigt 5 est délimitée directement dans le plancher, au voisinage immédiat de l'orifice 10 dans lequel s'engage directement la partie active 7 du doigt.

Le siège 1ª comporte par ailleurs un élément d'armature 31 muni de deux doigts latéraux 32 guidés, par l'intermédiaire d'un patin 33, dans un rail creux 34 à ouverture latérale, fixé sur une partie à peu près verticale 35 du plancher du véhicule.

Le rail creux 34 a donc une section en C et le patin 33 comprend une partie interne 36 qui coulisse dans le rail et dont la section est à cet effet complémentaire de la section intérieure transversale du rail. Ce patin comporte par ailleurs deux parties externes 37, faisant saillie à l'extérieur du rail et délimitant chacune un évasement dirigé vers le haut ou encore vers le siège. Chacun de ces évasements est délimité par un fond 38 et deux faces latérales inclinées 39 (Figs 7 et 8).

Dans le prolongement de ce fond et de la partie inférieure des faces latérales, est prévu dans la partie interne du patin un logement 40 dont la forme est complémentaire de celle des doigts 32.

De plus, un dispositif de réglage et d'immobilisation de la coulisse 2 par rapport au rail 3 est également prévu ; ce dispositif actionné par un levier de commande 41, est visible sur les figures 4 5 et 6. Il peut être considéré comme classique et n'a donc pas été représenté plus en détail.

Le montage d'un siège réalisé suivant les figures 1 à 3 s'effectue de la façon suivante :
- ce siège est préalablement équipé de deux ensembles à coulisse 2 et rail 3, chaque rail étant destiné à coopérer avec une partie du plancher, réalisée par exemple comme représenté aux figures 2 et 3. Le montage s'effectue en engageant les deux doigts 7 dans leur cuvette respective 11, en posant la partie extrême opposée du rail, c'est-à-dire la partie 19 de la patte 18, sur la face 20 du plancher, puis en faisant coulisser longitudinalement l'ensemble de façon à engager chaque doigt 7 dans le guide ou le logement associé 13, jusqu'à ce que chaque butée constituée par la partie repliée 21 de la patte 18 vienne en appui sur la face correspondante 22 du plancher. La dernière opération consiste à serrer les deux vis 23 pour assurer la fixation des rails sur le plancher.

Dans l'exemple des figures 4 à 6, le siège est équipé d'un côté d'un ensemble de coulisse et de rail analogue à ceux qui équipent le siège de la figure 1, et comporte de l'autre côté deux doigts 32 s'étendant transversalement par rapport à la direction longitudinale du rail.

Le rail latéral 34 équipé du patin 33 ayant été préalablement fixé au plancher, le montage du siège s'effectue en engageant transversalement les deux doigts 32 dans les logements appropriés du patin 33, cet engagement étant facilité par la présence des parties évasées 38,39.

On place ensuite le doigt 7 sur le fond de la cuvette 11a et la patte 18 sur la face 20 du plancher, puis comme cela a déjà été expliqué précédemment à propos du siège de la figure 1, on fait glisser l'ensemble longitudinalement de façon à engager le doigt 7 dans l'orifice 10 jusqu'à ce que la butée 21 vienne en appui contre la partie 22 du plancher. On fixe enfin la vis 23.

Il résulte de ce qui précède, que lors du montage, l'approche des divers moyens de liaison est facilitée par l'agencement des faces inclinées ménagées soit directement dans le plancher (Fig 4), soit dans une cuvette rapportée (Fig 2), soit encore dans un patin (Fig 8), l'évasement de ces surfaces inclinées en direction du siège permettant de centrer automatiquement aussi bien un doigt longitudinal que les doigts transversaux, par rapport aux logements qui doivent les recevoir. Le montage du siège peut ainsi être effectué au moyen de robots, capables de placer le siège avec une précision relative de façon que les doigts se trouvent au-dessus des faces inclinées associées. L'approche de la butée 21 vers la face 22 du plancher s'effectue à la hauteur voulue, grâce à l'appui du rail par l'intermédiaire de la patte 19, sur la face supérieure 20 du plancher.

Entre les deux modes de réalisation prévus, figure 1, d'une part, et figures 4 à 6, d'autre part, on pourra préférer le second car il ne nécessite qu'une seule vis de fixation.

## Revendications

1. Agencement d'un siège (1,1ª) sur un plancher (4) de véhicule automobile, comprenant au moins un rail (3) fixé au plancher, au moins une coulisse (2) fixée au siège et coopérant avec le rail, ce dernier étant fixé au plancher, d'une part, par des moyens d'accrochage comprenant des organes mâle et femelle complémentaires, portés respectivement par le rail et le plancher et pouvant etre engagés l'un dans l'autre ou dégagés par un déplacement relatif suivant une direction sensiblement parallèle à la direction longitudinale du rail, et, d'autre part, par des moyens d'immobilisation, caractérisé en ce que le plancher (4) comporte au voisinage dudit organe femelle (10) un organe de guidage (11;11a) à section transversale en V, comportant un fond (14) et deux parois latérales (15) évasées en direction du siège, ledit organe femelle (10) étant disposé dans le prolongement du fond et de la partie adjacente desdites parois latérales.

2. Agencement suivant la revendication 1, caractérisé en ce que l'organe de guidage (11a) est délimité directement dans un renfoncement du plancher qui délimite également un orifice (10) constituant l'organe femelle.

3. Agencement suivant la revendication 1, caractérisé en ce que l'organe de guidage (11) est rapporté dans un renfoncement (8) du plancher et comporte une paroi sensiblement verticale (12) dans laquelle est ménagé un guide tubulaire (13) qui est engagé dans un orifice (10) du plancher et recoit l'organe mâle (7).

4. Agencement suivant l'une quelconque des revendication 1 à 3, caractérisé en ce que le rail (3) comporte à son extrémité arrière en considérant le sens de déplacement de rail correspondant à l'engagement des moyens d'accrochage, une surface (19) d'appui sur une surface (20) sensiblement horizontale du plancher et une surface inclinée (21) adaptée pour venir en butée contre une surface également inclinée (22) du plancher.

5. Agencement suivant la revendication 4, caractérisé en ce que des moyens de fixation (23,24) sont prévus entre lesdites surfaces inclinées (21,22).

6. Agencement suivant la revendication 4, caractérisé en ce que le rail porte à son extrémité arrière une patte (18) qui délimite lesdites surfaces d'appui (19) et inclinée (21).

7. Agencement suivant la revendication 1 dans lequel le siège comporte au moins deux doigts latéraux (32) s'étendant perpendiculairement à la direction longitudinale de la coulisse (2) et du rail (3), chaque doigt (32) étant monté coulissant, par l'intermédiaire d'un patin (33), dans un rail (34), caractérisé en ce que le patin (33) comporte un logement (40) pour chaque doigt latéral (32) et délimite au voisinage immédiat de ce logement une zone de guidage évasée comportant un fond (38) et deux parois (39), le logement (40) étant situé dans le prolongement du fond (38) et de la partie adjacente des parois (39).

## Claims

1. Arrangement of a seat (1, 1a) on the floor (4) of a motor vehicle, comprising at least one rail (3) fixed to the floor, at least one slide (2) fixed to the seat and cooperating with the rail, said rail being fixed to the floor on the one hand by hooking means comprising complementary male and female elements carried by the rail and the floor respectively and being engageable in one another or disengageable by a relative displacement substantially parallel to the longitudinal direction of the rail and, on the other hand, by immobilising means, characterised in that the floor (4) comprises in the vicinity of said female element (10) a guide element (11; 11a) having a V-shaped cross section, comprising a base (14) and two lateral walls (15) which open out in the direction of the seat, said female element (10) being disposed in the extension of the base and of an adjacent part of said lateral walls.

2. An arrangement as claimed in claim 1, characterised in that the guide element (11a) is defined directly in a recess of the floor which also defines an orifice (10) constituting the female element.

3. An arrangement as claimed in claim 1, characterised in that the guide element (11) is mounted in a recess (8) of the floor and comprises a substantially vertical wall (12) in which is provided a tubular guide (13) which is engaged in an orifice (10) of the floor and receives the male element (7).

4. An arrangement as claimed in any of claims 1 to 3, characterised in that the rear end of the rail (3) with regard to the direction of displacement of the rail corresponding to the engagement of the hooking means comprises a surface (19) bearing on a substantially horizontal surface (20) of the floor and an inclined surface (21) adapted to come into abutment with another inclined surface (22) of the floor.

5. An arrangement as claimed in claim 4, characterised in that fixing means (23, 24) are provided between said inclined surfaces (21, 22).

6. An arrangement as claimed in claim 4, characterised in that the rear end of the rail carries a tab (18) which defines said bearing surface (19) and said inclined surface (21).

7. An arrangement as claimed in claim 1, in which the seat comprises at least two lateral pins (32) which extend in a direction perpendicular to the longitudinal direction of the slide (2) and the rail (3), each pin (32) being slidably mounted by way of a shoe (33) in a rail (34), characterised in that the shoe (33) comprises a recess (40) for each lateral pin (32) and defines in the immediate vicinity of said recess a splayed guide region comprising a base (38) and two walls (39), the recess being disposed in the extension of the base (38) and an adjacent part of the walls (39).

## Patentansprüche

1. Befestigung eines Sitzes (1, 1a), an einer Bodengruppe (4) eines Kraftfahrzeugs, mit mindestens einer an der Bodengruppe befestigten Schiene (3) und mindestens einer an dem Sitz befestigten und mit der Schiene zusammenwirkenden Kulisse (2), wobei die Schiene einerseits durch Halterungsmittel, die zusammenpassende Steck- und Buchsenelemente umfassen, welche an der Schiene bzw. an der Bodengruppe angebracht sind und ineinander eingreifen oder voneinander gelöst werden können, durch eine gegenseitige Verschiebung in einer Richtung im wesentlichen parallel zur Längsrichtung der Schiene, und andererseits durch Befestigungsmittel an der Bodengruppe befestigt ist, dadurch gekennzeichnet, daß die Bodengruppe (4) in der Nähe des Buchsenelements (10) eine Führungseinrichtung (11; 11a) mit einem V-förmigen Querschnitt aufweist, die eine Sohle (14) und zwei zum Sitz hin auseinanderlaufende Seitenwände (15) enthält, wobei das Buchsenelement (10) in der Verlängerung der Sohle und des sich an die Seitenwände anschließenden Bereichs angeordnet ist.

2. Befestigung nach Anspruch 1, dadurch gekennzeichnet, daß die Führungseinrichtung (11a) direkt durch eine Vertiefung der Bodengruppe definiert ist, die gleichzeitig eine das Buchsenelement bildende Öffnung (10) begrenzt.

3. Befestigung nach Anspruch 1, dadurch gekennzeichnet, daß die Führungseinrichtung (11) in einer Vertiefung (8) der Bodengruppe angeordnet ist und eine im wesentlichen vertikale Wand (12) enthält, in welcher sich eine Führungsröhre (13) befindet, die in eine Öffnung (10) der Bodengruppe eingesetzt ist und das Steckelement (7) aufnimmt.

4. Befestigung nach einem der Ansprüche 1 bis 3, dadurch gekennzeichnet, daß die Schiene (3) an seinem in Verschiebungsrichtung der Schiene entsprechend dem Zusammenfügen der Halterungsmittel hinteren Ende eine Stützfläche (19) auf einer im wesentlichen horizontalen Fläche (20) der Bodengruppe aufweist sowie eine geneigte Fläche (21) zur Anlage gegen eine gleichermaßen geneigte Fläche (22) der Bodengruppe.

5. Befestigung nach Anspruch 4, dadurch gekennzeichnet, daß die Befestigungsmittel (23, 24) zwischen den geneigten Flächen (21, 22) vorgesehen sind.

6. Befestigung nach Anspruch 4, dadurch gekennzeichnet, daß die Schiene an ihrem hinteren Ende eine Lasche (18) trägt, welche die Stützfläche (19) und die geneigte Fläche (21) definiert.

7. Befestigung nach Anspruch 1, wobei der Sitz mindestens zwei sich senkrecht zur Längsrichtung der Kulisse (2) und der Schiene (3) erstreckende Seitenfinger (32) aufweist, von denen jeder Finger (32) mittels eines Gleitschuhes (33) in einer Schiene (34) verschiebbar gelagert ist, dadurch gekennzeichnet, daß der Gleitschuh (33) eine Aufnahme (40) für jeden Seitenfinger (32) aufweist und in unmittelbarer Nähe dieser Aufnahme einen sich verbreiternden Führungsbereich mit einem Boden (38) und zwei Wänden (39) begrenzt, wobei sich die Aufnahme (40) in der Verlängerung des Bodens (38) und des sich an die Wände (39) anschließenden Bereichs befindet.

**FIG.1**

**FIG.4**

FIG.5

FIG.6